# EUROPEAN PATENT APPLICATION

(11) **EP 4 059 769 A1**
(43) Date of publication of application: **21.09.2022**
(21) Application number: 22162820.9
(22) Date of filing: 17.03.2022
(51) Int. Cl.: B60L 58/10

(54) **CLOUD-DEVICE SYNERGY-BASED BATTERY MANAGEMENT SYSTEM, VEHICLE, AND BATTERY MANAGEMENT METHOD**

(30) Priority: 18.03.2021 CN 202110292649
(71) Applicant: Huawei Digital Power Technologies Co., Ltd., Shenzhen, 518043 (CN)
(72) Inventor: YU, Wei, Shenzhen, 518129 (CN); LONG, Gang, Shenzhen, 518129 (CN); LI, Zhirun, Shenzhen, 518129 (CN)
(74) Representative: Maiwald Patent- und Rechtsanwaltsgesellschaft mbH

(57) **Abstract**

This application relates to the field of artificial intelligence technologies, and in particular, to a cloud-device synergy-based battery management system, a vehicle, and a battery management method.

The system includes a vehicle and a cloud BMS. The vehicle includes a vehicle BMS, and the vehicle BMS includes a sensor and a decision processing module. The vehicle BMS is configured to: measure a battery parameter of the vehicle by using the sensor, and send first battery parameter data obtained through measurement to the cloud BMS. The cloud BMS is configured to: train second battery parameter data, and send a first training result obtained through training to the vehicle BMS, where the second battery parameter data includes the first battery parameter data and historical battery parameter data. The vehicle BMS is further configured to update the decision processing module based on the first training result.

The system implements vehicle battery management through cooperation of the vehicle BMS and the cloud BMS. This improves real-time performance and reliability of vehicle battery management.

## Description

### TECHNICAL FIELD

This application relates to the field of artificial intelligence technologies, and in particular, to a cloud-device synergy-based battery management system, a vehicle, and a battery management method.

### BACKGROUND

Main functions of a battery management system (Battery Management System, BMS) are to intelligently manage and maintain each battery unit, prevent a battery from being overcharged and overdischarged, prolong a service life of the battery, and monitor a state of the battery. The BMS includes various sensors, an actuator, a controller, a signal cable, and the like. Functions of the BMS include: battery parameter detection, battery state estimation, online failure diagnosis, battery safety control and alarm, charging control, battery equalization, thermal management, network communication, information storage, and the like.

However, the BMS has limited computing resources, and it is difficult to store and process massive data. In particular, in terms of important functions such as battery safety pre-warning and battery state computation, it is difficult to use a new technology, for example, big data or artificial intelligence (Artificial Intelligence, AI), to improve performance.

### SUMMARY

Embodiments of this application provide a cloud-device synergy-based battery management system, a vehicle, and a battery management method, to implement vehicle battery management through cooperation of a vehicle BMS and a cloud BMS. This can improve real-time performance and reliability of vehicle battery management while resolving a problem of insufficient computing power of the vehicle BMS.

According to a first aspect, an embodiment of this application provides a cloud-device synergy-based battery management system. The cloud-device synergy-based battery management system includes: a vehicle and a cloud battery management system. The vehicle includes a vehicle battery management system, and the vehicle battery management system includes a sensor and a decision processing module. The vehicle battery management system is configured to: measure a battery parameter of the vehicle by using the sensor, and send first battery parameter data obtained through measurement to the cloud battery management system; the cloud battery management system is configured to: train second battery parameter data, and send a first training result obtained through training to the vehicle battery management system, where the second battery parameter data includes the first battery parameter data and historical battery parameter data; and the vehicle battery management system is further configured to update the decision processing module based on the first training result.

That is, the vehicle BMS in the cloud-device synergy-based battery management system may measure the battery parameter of the vehicle, the cloud BMS may train battery parameter data, and the vehicle BMS may further update the decision processing module based on a training result. In this way, vehicle battery management is implemented through cooperation of the vehicle BMS and the cloud BMS. This improves real-time performance and reliability of vehicle battery management.

In a possible implementation, the first training result includes a cloud pre-training model. The vehicle battery management system is specifically configured to: perform fine-tuning or transfer learning on the cloud pre-training model to obtain a second training result, and update the decision processing module based on the second training result.

To be specific, in this implementation, the cloud BMS may pre-train the battery parameter data through AI-based pre-training, and the vehicle BMS may perform fine-tuning or transfer learning on the training result by using an AI-based fine-tuning mechanism. The vehicle BMS can perform learning and training based on massive data, and can perform model fine-tuning with reference to unique data of the vehicle BMS. When the decision processing module is updated on this basis, precision, real-time performance, and reliability of the model are improved. In brief, the vehicle BMS has a capability of performing model training and decision processing based on massive cloud data and the unique data of the vehicle BMS.

In a possible implementation, the first training result includes a global model or a local model, a global model is used for a plurality of different vehicle types including a type to which the vehicle belongs, and a local model is used for the vehicle or a vehicle type to which the vehicle belongs. The vehicle battery management system is specifically configured to: update the decision processing module based on the global model or the local model; or perform fine-tuning or transfer learning on the global model or the local model to obtain a third training result, and update the decision processing module based on the third training result.

That is, in this implementation, a training result improved by the cloud BMS may include the global model or the local model. The vehicle BMS of the vehicle may update the decision processing module based on the global model or the local model, or may perform fine-tuning or transfer learning on the global model or the local model and then update the decision processing module. This meets different management requirements of vehicle battery management, and improves flexibility of vehicle battery management.

In a possible implementation, the sensor includes one or more of an electrochemical impedance spectrum sensor, a pressure sensor, and an acoustic sensor, where the electrochemical impedance spectrum sensor is configured to measure an electrochemical impedance spectrum signal of a battery of the vehicle; the pressure sensor is configured to measure an internal pressure signal of the battery of the vehicle; and the acoustic sensor is configured to measure an internal acoustic signal of the battery of the vehicle.

That is, in this implementation, the vehicle BMS of the vehicle may measure the electrochemical impedance spectrum signal, the internal pressure signal, and the internal acoustic signal of the battery of the vehicle by respectively using the electrochemical impedance spectrum sensor, the pressure sensor, and the acoustic sensor. In this way, the cloud BMS can train battery parameter data including the electrochemical impedance spectrum signal, the internal pressure signal, and the internal acoustic signal of the battery of the vehicle. This enhances stability of the cloud-device synergy-based battery management system.

According to a second aspect, an embodiment of this application provides a vehicle. The vehicle includes a vehicle battery management system, and the vehicle battery management system includes a sensor and a decision processing module.

The vehicle battery management system is configured to: measure a battery parameter of the vehicle by using the sensor, and send first battery parameter data obtained through measurement to a cloud battery management system; and receive a first training result from the cloud battery management system, and update the decision processing module based on the first training result, where the first training result is a training result obtained after the cloud battery management system trains second battery parameter data, and the second battery parameter data includes the first battery parameter data and historical battery parameter data.

That is, the vehicle BMS of the vehicle may update the decision processing module based on the first training result provided by the cloud BMS. This improves real-time performance and reliability of battery management.

In a possible implementation, the first training result includes a cloud pre-training model. The vehicle battery management system is specifically configured to: perform fine-tuning or transfer learning on the cloud pre-training model to obtain a second training result, and update the decision processing module based on the second training result.

That is, in this implementation, the vehicle BMS of the vehicle may perform fine-tuning or transfer learning on the cloud pre-training model provided by the cloud BMS, and then update the decision processing module. This can improve precision, real-time performance, and reliability of the model.

In a possible implementation, the first training result includes a global model or a local model, a global model is used for a plurality of different vehicle types including a type to which the vehicle belongs, and a local model is used for the vehicle or the vehicle type to which the vehicle belongs. The vehicle battery management system is specifically configured to: update the decision processing module based on the global model or the local model; or perform fine-tuning or transfer learning on the global model or the local model to obtain a third training result, and update the decision processing module based on the third training result.

That is, in this implementation, the vehicle BMS of the vehicle may update the decision processing module based on the global model or the local model, or may perform fine-tuning or transfer learning on the global model or the local model and then update the decision processing module. This meets different management requirements of vehicle battery management, and improves flexibility of vehicle battery management.

In a possible implementation, the sensor includes one or more of an electrochemical impedance spectrum sensor, a pressure sensor, and an acoustic sensor, where the electrochemical impedance spectrum sensor is configured to measure an electrochemical impedance spectrum signal of a battery of the vehicle; the pressure sensor is configured to measure an internal pressure signal of the battery of the vehicle; and the acoustic sensor is configured to measure an internal acoustic signal of the battery of the vehicle.

That is, in this implementation, the vehicle BMS of the vehicle may measure the electrochemical impedance spectrum signal, the internal pressure signal, and the internal acoustic signal of the battery of the vehicle by respectively using the electrochemical impedance spectrum sensor, the pressure sensor, and the acoustic sensor. In this way, the cloud BMS can train battery parameter data including the electrochemical impedance spectrum signal, the internal pressure signal, and the internal acoustic signal of the battery of the vehicle. This enhances stability of a cloud-device synergy-based battery management system.

According to a third aspect, an embodiment of this application provides a cloud-device synergy-based battery management method, applied to a cloud-device synergy-based battery management system. The cloud-device synergy-based battery management system includes a vehicle and a cloud battery management system, the vehicle includes a vehicle battery management system, and the vehicle battery management system includes a sensor and a decision processing module. The method includes: The vehicle battery management system measures a battery parameter of the vehicle by using the sensor, and sends first battery parameter data obtained through measurement to the cloud battery management system; the cloud battery management system trains second battery parameter data, and sends a first training result obtained through training to the vehicle battery management system, where the second battery parameter data includes the first battery parameter data and historical battery parameter data; and the vehicle battery management system further updates the decision processing module based on the first training result.

In a possible implementation, the first training result includes a cloud pre-training model. That the vehicle battery management system updates the decision processing module based on the first training result includes: The vehicle battery management system performs fine-tuning or transfer learning on the cloud pre-training model to obtain a second training result, and updates the decision processing module based on the second training result.

In a possible implementation, the first training result includes a global model or a local model, where a global model is used for a plurality of different vehicle types including a type to which the vehicle belongs, and a local model is used for the vehicle or the vehicle type to which the vehicle belongs. That the vehicle battery management system updates the decision processing module based on the first training result includes: The vehicle battery management system updates the decision processing module based on the global model or the local model, or performs fine-tuning or transfer learning on the global model or the local model to obtain a third training result, and updates the decision processing module based on the third training result.

In a possible implementation, the sensor includes one or more of an electrochemical impedance spectrum sensor, a pressure sensor, and an acoustic sensor, where the electrochemical impedance spectrum sensor is configured to measure an electrochemical impedance spectrum signal of a battery of the vehicle; the pressure sensor is configured to measure an internal pressure signal of the battery of the vehicle; and the acoustic sensor is configured to measure an internal acoustic signal of the battery of the vehicle.

In a possible implementation, the first battery parameter data includes current parameter data. The method further includes: The vehicle battery management system calculates, based on a fine current granularity, ampere hour integral information corresponding to the current parameter data, and adds the ampere hour integral information to the first battery parameter data, where the fine current granularity includes millisecond-level or higher precision.

That is, in this implementation, the vehicle BMS of the vehicle may add fine current granularity (the millisecond-level or higher precision) detection, and record a cumulative charging and discharging capacity by using an ampere hour integral, to improve data precision of the cloud BMS, reduce a reporting frequency of measurement data of the vehicle BMS, reduce a data transmission amount, and further improve precision of ampere hour integral data of the cloud BMS.

In a possible implementation, that the vehicle battery management system sends first battery parameter data obtained through measurement to the cloud battery management system includes: The vehicle battery management system adds the first battery parameter data to a battery measurement message, and sends the battery management message to the cloud battery management system, where the battery measurement message includes a message serial number.

That is, in this implementation, the vehicle BMS of the vehicle may send battery parameter data to the cloud BMS in a form of the battery measurement message. This improves reliability of battery parameter data transmission. In addition, the message serial number is added, so that the cloud BMS can accurately learn of whether the battery measurement message of the vehicle BMS is continuous or lost.

It may be understood that the cloud-device synergy-based battery management method provided in the third aspect is a method performed by the cloud-device synergy-based battery management system provided in the first aspect. Therefore, for beneficial effects that can be achieved by the method, refer to the foregoing corresponding beneficial effects.

According to a fourth aspect, an embodiment of this application provides a cloud-device synergy-based battery management method, applied to a vehicle battery management system. The vehicle battery management system includes a sensor and a decision processing module. The vehicle battery management system measures a battery parameter of a vehicle by using the sensor, sends first battery parameter data obtained through measurement to a cloud battery management system, receives a first training result from the cloud battery management system, and updates the decision processing module based on the first training result, where the first training result is a training result obtained after the cloud battery management system trains second battery parameter data, and the second battery parameter data includes the first battery parameter data and historical battery parameter data.

In a possible implementation, the first training result includes a cloud pre-training model. That the vehicle battery management system updates the decision processing module based on the first training result includes: The vehicle battery management system performs fine-tuning or transfer learning on the cloud pre-training model to obtain a second training result, and updates the decision processing module based on the second training result.

In a possible implementation, the first training result includes a global model or a local model, where a global model is used for a plurality of different vehicle types including a type to which the vehicle belongs, and a local model is used for the vehicle or the vehicle type to which the vehicle belongs.

That the vehicle battery management system updates the decision processing module based on the first training result includes:

The vehicle battery management system updates the decision processing module based on the global model or the local model, or performs fine-tuning or transfer learning on the global model or the local model to obtain a third training result, and updates the decision processing module based on the third training result.

In a possible implementation, the sensor includes one or more of an electrochemical impedance spectrum sensor, a pressure sensor, and an acoustic sensor, where the electrochemical impedance spectrum sensor is configured to measure an electrochemical impedance spectrum signal of a battery of the vehicle; the pressure sensor is configured to measure an internal pressure signal of the battery of the vehicle; and the acoustic sensor is configured to measure an internal acoustic signal of the battery of the vehicle.

In a possible implementation, the first battery parameter data includes current parameter data. The method further includes: The vehicle battery management system calculates, based on a fine current granularity, ampere hour integral information corresponding to the current parameter data, and adds the ampere hour integral information to the first battery parameter data, where the fine current granularity includes millisecond-level or higher precision.

That is, in this implementation, the vehicle BMS of the vehicle may add fine current granularity (the millisecond-level or higher precision) detection, and record a cumulative charging and discharging capacity by using an ampere hour integral, to improve data precision of the cloud BMS, reduce a reporting frequency of measurement data of the vehicle BMS, reduce a data transmission amount, and further improve precision of ampere hour integral data of the cloud BMS.

In a possible implementation, that the vehicle battery management system sends first battery parameter data obtained through measurement to the cloud battery management system includes: The vehicle battery management system adds the first battery parameter data to a battery measurement message, and sends the battery management message to the cloud battery management system, where the battery measurement message includes a message serial number.

That is, in this implementation, the vehicle BMS of the vehicle may send battery parameter data to the cloud BMS in a form of the battery measurement message. This improves reliability of battery parameter data transmission. In addition, the message serial number is added, so that the cloud BMS can accurately learn of whether the battery measurement message of the vehicle BMS is continuous or lost.

It may be understood that the cloud-device synergy-based battery management method provided in the fourth aspect is a method performed by the vehicle provided in the second aspect. Therefore, for beneficial effects that can be achieved by the method, refer to the foregoing corresponding beneficial effects.

According to the cloud-device synergy-based battery management system, the vehicle, and the battery management method provided in embodiments of this application, vehicle battery management can be implemented through cooperation of the vehicle BMS and the cloud BMS. This can improve real-time performance and reliability of vehicle battery management while resolving a problem of insufficient computing power of the vehicle BMS.

### BRIEF DESCRIPTION OF DRAWINGS

FIG. 1 is a schematic diagram of a structure of a cloud-device synergy-based battery management system according to an embodiment of this application;
FIG. 2 is a schematic diagram of information of a cloud-device synergy-based battery management method according to an embodiment of this application;
FIG. 3 is a schematic flowchart of a cloud-device synergy-based battery management method according to an embodiment of this application; and
FIG. 4 is a schematic diagram of an implementation process of a cloud-device synergy-based battery management method according to an embodiment of this application.

### DESCRIPTION OF EMBODIMENTS

To make the objectives, technical solutions, and advantages of embodiments of this application clearer, the following describes the technical solutions in embodiments of this application with reference to the accompanying drawings.

In description of embodiments of this application, the words such as "for example" are used to indicate an example, an illustration, or description. Any embodiment or design solution described with "for example" in embodiments of this application is not to be construed as being more preferred or advantageous than another embodiment or design solution. Specifically, the words such as "for example" are intended to present a related concept in a specific manner.

In the description of embodiments of this application, the term "and/or" is merely used to describe an association relationship between associated objects, and represents that three relationships may exist. For example, A and/or B may represent the following three cases: Only A exists, only B exists, and both A and B exist. In addition, unless otherwise stated, the term "a plurality of' means two or more. For example, a plurality of systems refer to two or more systems, and a plurality of screen terminals refer to two or more screen terminals.

In addition, the terms "first" and "second" are merely used for description and should not be understood as an indication or implication of relative importance or as an implicit indication of an indicated technical feature. Therefore, a feature defined with "first" or "second" may explicitly or implicitly include one or more features. The terms "include", "comprise", "have", and variations thereof all mean "include but be not limited to" unless otherwise specified in another manner.

A main function of a BMS is to intelligently manage and maintain each battery unit, prevent a battery from being overcharged and overdischarged, prolong a service life of the battery, and monitor a state of the battery.

The BMS includes various sensors, an actuator, a controller, a signal cable, and the like. To meet a related standard or specification, a conventional BMS should have the following functions:
(1) Battery parameter detection
   Specifically, battery parameters may include a total voltage, a total current, a voltage of a battery cell, a temperature, smoke, insulation, collision detection, and the like.
(2) Battery state estimation
   Specifically, battery states may include a state of charge (State of Charge, SOC) or a depth of discharge (Depth of Discharge, DOD), a state of health (State of Health, SOH), a state of function (State of Function, SOF), a state of energy (State of Energy, SOE), a state of security (State of Security, SOS), and the like.
(3) Online failure diagnosis
   Specifically, the online failure diagnosis may include failure detection, failure type determining, failure positioning, failure information output, and the like.
(4) Battery safety control and alarm
   Specifically, the BMS alarms after a failure is detected, to prevent a high temperature, a low temperature, overcharging, overdischarging, an overcurrent, electric leakage, or the like from damaging a battery and a person.
(5) Charging control
   Specifically, the BMS controls a charger to safely charge a battery based on a characteristic of the battery, a temperature, and a power class of the charger.
(6) Battery equalization
   Specifically, inconsistency causes a capacity of a battery pack to be less than a capacity of a minimum cell in the battery pack. The battery equalization means to make the capacity of the battery pack to be as close to the capacity of the minimum cell as possible in a manner such as active or passive equalization or dissipative or non-dissipative equalization based on battery cell information.
(7) Thermal management
   Specifically, the BMS determines an active heating/cooling strength based on temperature distribution information and a charging and discharging requirement of a battery pack, so that a battery operates at the most appropriate temperature as much as possible, and fully exerts battery performance.
(8) Network communication
   Specifically, the BMS needs to communicate with another module of the system for data transmission and control.
(9) Information storage
   Specifically, the BMS is configured to store key data such as an SOC, an SOH, an SOF, an SOE, a cumulative quantity of ampere hours (Ampere hours, Ah) of charging and discharging, failure code, and consistency.

However, the BMS has limited computing resources, and it is difficult to store and process massive data. In particular, in terms of important functions such as battery safety pre-warning and battery state computation, it is difficult to use a new technology, for example, big data or AI, to improve performance.

To resolve the foregoing technical problems, this application provides a cloud-device synergy-based battery management system, a vehicle, and a battery management method, to implement vehicle battery management through cooperation of a vehicle BMS and a cloud BMS. This can improve real-time performance and reliability of vehicle battery management while resolving a problem of insufficient computing power of the vehicle BMS.

The following uses specific embodiments for illustration.

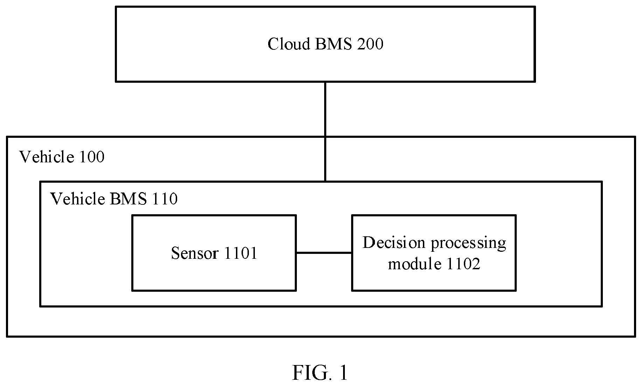

FIG. 1 is a schematic diagram of a structure of a cloud-device synergy-based battery management system according to an embodiment of this application. As shown in FIG. 1, the cloud-device synergy-based battery management system includes a vehicle 100 and a cloud BMS 200. The vehicle 100 includes a vehicle BMS 110, and the vehicle BMS 110 includes a sensor 1101 and a decision processing module 1102.

The vehicle BMS 110 is configured to: measure a battery parameter of the vehicle 100 by using the sensor 1101, and send first battery parameter data obtained through measurement to the cloud BMS 200.

The cloud BMS 200 is configured to: train second battery parameter data, and send a first training result obtained through training to the vehicle BMS 110, where the second battery parameter data includes the first battery parameter data and historical battery parameter data.

The vehicle BMS 110 is further configured to update the decision processing module 1102 based on the first training result.

The historical battery parameter data may include historical battery parameter data of the vehicle 100, or may include historical battery parameter data of another vehicle.

It can be learned that vehicle battery management is implemented through cooperation of the vehicle BMS 110 and the cloud BMS 200 in the cloud-device synergy-based battery management system. This can improve real-time performance and reliability of vehicle battery management.

In some embodiments, the cloud BMS 200 may pre-train the second battery parameter data to obtain a cloud pre-training model. The vehicle BMS 110 may be specifically configured to: perform fine-tuning or transfer learning on the cloud pre-training model to obtain a second training result, and update the decision processing module 1102 based on the second training result.

Pre-training and fine-tuning may refer to performing pre-training on a large data set, and then performing fine-tuning based on a specific task. This can accelerate model training and alleviate an over-fitting problem caused by an insufficient data amount. A pre-training and fine-tuning mode may be considered as a specific means of transfer learning (Transfer Learning, TL).

For example, pre-training is that the cloud BMS 200 learns mutual relationships between data dimensions of various batteries and characteristics of the data dimensions in various operation conditions from massive data. The data dimensions include a time sequence, a vehicle speed, a current, a voltage, a temperature, a capacity, a failure, and the like. The relationships learned through pre-training are mutual relationships between the data dimensions and derived characteristics, for example, relationships between the failure and the vehicle speed, the current, the voltage, and the time sequence.

It can be learned that in this embodiment of this application, pre-training and fine-tuning are used, so that a final training result has both general information learned from big data and information unique to the final training result. This manner is more complicated than a manner using a global model and a local model. An advantage of this manner is that the vehicle BMS 110 also has AI model training and decision processing capabilities with less hardware costs. This improves accuracy and reliability of battery management.

In some embodiments, the cloud BMS 200 may train the second battery parameter data to obtain a global model or a local model, where a global model is used for a plurality of different vehicle types including a type to which the vehicle 100 belongs, and a local model is used for the vehicle 100 or the vehicle type to which the vehicle 100 belongs. The vehicle BMS 110 may update the decision processing module based on the global model or the local model; or may perform fine-tuning or transfer learning on the global model or the local model to obtain a third training result, and update the decision processing module 1102 based on the third training result.

The global model refers to training a model for all vehicles without distinguishing between vehicles. In this manner, calculation efficiency is high but precision for a specific vehicle is low. For example, the global model corresponds to all types of vehicles. The model is oriented to a specific task or function, for example, failure pre-warning or capacity estimation. The model can be directly used for result reasoning in these scenarios.

The local model refers to training a model for a vehicle type or even a vehicle, and one model is used for a vehicle type or a vehicle. In this manner, the model has high precision for a specific vehicle but low calculation efficiency. For example, the local model corresponds to a vehicle type or a vehicle, and the model is oriented to a specific task or function.

It can be learned that in this embodiment of this application, the global model or the local model may be used, to meet different management requirements of vehicle battery management, and improve flexibility of vehicle battery management.

In some embodiments, the sensor 1101 may include an electrochemical impedance spectrum sensor, a pressure sensor, an acoustic sensor, and the like. The electrochemical impedance spectrum sensor is configured to measure an electrochemical impedance spectrum signal of a battery of the vehicle, the pressure sensor is configured to measure an internal pressure signal of the battery of the vehicle, and the acoustic sensor is configured to measure an internal acoustic signal of the battery of the vehicle.

The electrochemical impedance spectrum signal refers to applying alternating current signals of different frequencies to the battery, observing a response manner of the battery, and obtaining response characteristics of internal impedances of the battery at different frequencies to the frequencies. The electrochemical impedance spectrum signal can reflect a health state, a failure state, an internal temperature state, and the like of the battery, has strong coupling, and can be learned through big data processing at the cloud BMS 200.

The internal pressure signal is closely associated with a lithium analysis state of the battery, and is greatly interfered with by an external factor, for example, shock or vibration. The cloud BMS 200 learns, from big data, a relationship between a battery pressure and the lithium analysis state under a complex external shock condition.

The internal acoustic signal is associated with the health state and the failure state of the battery, has strong coupling, and is easily interfered with by an external signal. Denoising, decoupling, and analysis may be performed on the internal acoustic signal by the cloud BMS 200 through big data processing.

It can be learned that in this embodiment of this application, the electrochemical impedance spectrum sensor, the pressure sensor, the acoustic sensor, and the like are added, to enhance system stability.

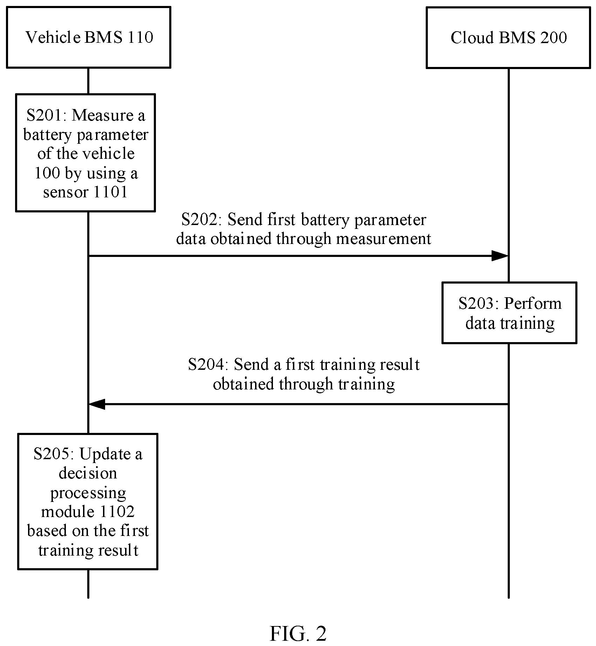

FIG. 2 is a schematic diagram of information of a cloud-device synergy-based battery management method according to an embodiment of this application. The method is applied to the cloud-device synergy-based battery management system shown in FIG. 1. The cloud-device synergy-based battery management system includes a vehicle 100 and a cloud BMS 200. The vehicle 100 includes a vehicle BMS 110, and the vehicle BMS 110 includes a sensor 1101 and a decision processing module 1102. As shown in FIG. 2, the cloud-device synergy-based battery management method may include the following steps:
S201: The vehicle BMS 110 measures a battery parameter of the vehicle 100 by using the sensor 1101.
S202: The vehicle BMS 110 sends first battery parameter data obtained through measurement to the cloud BMS 200.
S203: The cloud BMS 200 trains second battery parameter data. The second battery parameter data includes the first battery parameter data and historical battery parameter data. The historical battery parameter data may include historical battery parameter data of the vehicle 100, or may include historical battery parameter data of another vehicle.
S204: The cloud BMS 200 sends a first training result obtained through training to the vehicle BMS 110.
S205: The vehicle BMS 110 further updates the decision processing module 1102 based on the first training result.

It can be learned that in this embodiment of this application, vehicle battery management is implemented through cooperation of the vehicle BMS 110 and the cloud BMS 200. This can improve real-time performance and reliability of vehicle battery management.

In some embodiments, the cloud BMS 200 in S203 may pre-train the second battery parameter data to obtain a cloud pre-training model. The vehicle BMS 110 in S205 may perform fine-tuning or transfer learning on the cloud pre-training model to obtain a second training result, and update the decision processing module 1102 based on the second training result. It can be learned that in this embodiment of this application, pre-training and fine-tuning are used, so that a final training result has both general information learned from big data and information unique to the final training result. This manner is more complicated than a manner using a global model and a local model. An advantage of this manner is that the vehicle BMS 110 also has AI model training and decision processing capabilities with less hardware costs. This improves accuracy and reliability of battery management.

In some embodiments, the cloud BMS 200 in S203 may train the second battery parameter data to obtain a global model or a local model, where a global model is used for a plurality of different vehicle types including a type to which the vehicle 100 belongs, and a local model is used for the vehicle 100 or the vehicle type to which the vehicle 100 belongs. The vehicle BMS 110 in S205 may update the decision processing module based on the global model or the local model; or may perform fine-tuning or transfer learning on the global model or the local model to obtain a third training result, and update the decision processing module 1102 based on the third training result. It can be learned that in this embodiment of this application, the global model or the local model may be used, to meet different management requirements of vehicle battery management, and improve flexibility of vehicle battery management.

In some embodiments, the sensor 1101 in S201 may include an electrochemical impedance spectrum sensor, a pressure sensor, an acoustic sensor, and the like. The electrochemical impedance spectrum sensor is configured to measure an electrochemical impedance spectrum signal of a battery of the vehicle, the pressure sensor is configured to measure an internal pressure signal of the battery of the vehicle, and the acoustic sensor is configured to measure an internal acoustic signal of the battery of the vehicle. It can be learned that in this embodiment of this application, the electrochemical impedance spectrum sensor, the pressure sensor, the acoustic sensor, and the like are added, to enhance system stability.

In some embodiments, the vehicle BMS 110 in S202 may calculate, based on a fine current granularity, ampere hour integral information corresponding to current parameter data, and add the ampere hour integral information to the first battery parameter data, where the fine current granularity includes millisecond-level or higher precision.

It can be learned that in this embodiment of this application, fine current granularity (the millisecond-level or higher precision) detection is added, and a cumulative charging and discharging capacity is recorded by using an ampere hour integral, to improve capacity data precision of the cloud BMS 200, reduce a reporting frequency of measurement data of the vehicle BMS 110, reduce a data transmission amount, and improve data precision of the cloud BMS 200. For example, previously, data is uploaded once at an interval of 10s, so that the cloud BMS 200 calculates an Ah quantity. Currently, the vehicle BMS 110 reports a cumulative Ah quantity within 5 minutes (a period can be set).

In some embodiments, the vehicle BMS 110 in S202 may add the first battery parameter data to a battery measurement message, and send the battery measurement message to the cloud BMS 200, where the battery measurement message includes a message serial number.

It can be learned that in this embodiment of this application, battery parameter data may be sent to the cloud BMS in a form of the battery measurement message. In addition, the message serial number is added to the battery measurement message, so that the cloud BMS can accurately learn of whether the battery measurement message of the vehicle BMS is continuous or lost.

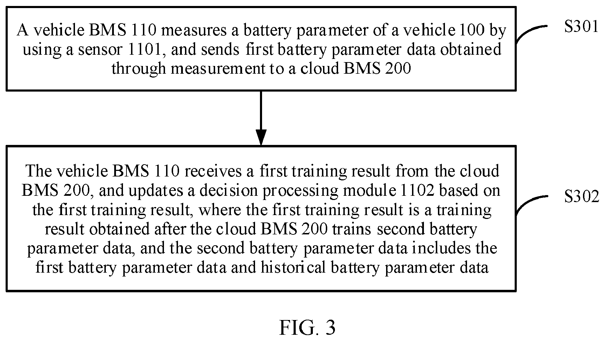

FIG. 3 is a schematic flowchart of a cloud-device synergy-based battery management method according to an embodiment of this application. The method is applied to the vehicle 100 shown in FIG. 1. The vehicle 100 includes a vehicle BMS 110, and the vehicle BMS 110 includes a sensor 1101 and a decision processing module 1102. As shown in FIG. 3, the cloud-device synergy-based battery management method may include the following steps:
S301: The vehicle BMS 110 measures a battery parameter of the vehicle 100 by using the sensor 1101, and sends first battery parameter data obtained through measurement to a cloud BMS 200.
S302: The vehicle BMS 110 receives a first training result from the cloud BMS 200, and updates the decision processing module 1102 based on the first training result, where the first training result is a training result obtained after the cloud BMS 200 trains second battery parameter data, and the second battery parameter data includes the first battery parameter data and historical battery parameter data.

It can be learned that in this embodiment of this application, the vehicle BMS 110 may update the decision processing module 1102 based on the first training result provided by the cloud BMS 200. This improves real-time performance and reliability of battery management.

In some embodiments, the cloud BMS 200 in S302 may pre-train the second battery parameter data to obtain a cloud pre-training model. The vehicle BMS 110 in S302 may perform fine-tuning or transfer learning on the cloud pre-training model to obtain a second training result, and update the decision processing module 1102 based on the second training result. It can be learned that in this embodiment of this application, pre-training and fine-tuning are used, so that a final training result has both general information learned from big data and information unique to the final training result. This manner is more complicated than a manner using a global model and a local model. An advantage of this manner is that the vehicle BMS 110 also has AI model training and decision processing capabilities with less hardware costs. This improves accuracy and reliability of battery management.

In some embodiments, the cloud BMS 200 in S302 may train the second battery parameter data to obtain a global model or a local model, where a global model is used for a plurality of different vehicle types including a type to which the vehicle 100 belongs, and a local model is used for the vehicle 100 or the vehicle type to which the vehicle 100 belongs. The vehicle BMS 110 in S302 may update the decision processing module based on the global model or the local model; or may perform fine-tuning or transfer learning on the global model or the local model to obtain a third training result, and update the decision processing module 1102 based on the third training result. It can be learned that in this embodiment of this application, the global model or the local model may be used, to meet different management requirements of vehicle battery management, and improve flexibility of vehicle battery management.

In some embodiments, the sensor 1101 in S301 may include an electrochemical impedance spectrum sensor, a pressure sensor, an acoustic sensor, and the like. The electrochemical impedance spectrum sensor is configured to measure an electrochemical impedance spectrum signal of a battery of the vehicle, the pressure sensor is configured to measure an internal pressure signal of the battery of the vehicle, and the acoustic sensor is configured to measure an internal acoustic signal of the battery of the vehicle. It can be learned that in this embodiment of this application, the electrochemical impedance spectrum sensor, the pressure sensor, the acoustic sensor, and the like are added, to enhance system stability.

In some embodiments, the vehicle BMS 110 in S301 may calculate, based on a fine current granularity, ampere hour integral information corresponding to current parameter data, and add the ampere hour integral information to the first battery parameter data, where the fine current granularity includes millisecond-level or higher precision.

It can be learned that in this embodiment of this application, fine current granularity (the millisecond-level or higher precision) detection is added, and a cumulative charging and discharging capacity is recorded by using an ampere hour integral, to improve capacity data precision of the cloud BMS 200, reduce a reporting frequency of measurement data of the vehicle BMS 110, reduce a data transmission amount, and improve data precision of the cloud BMS 200. For example, previously, data is uploaded once at an interval of 10s, so that the cloud BMS 200 calculates an Ah quantity. Currently, the vehicle BMS 110 reports a cumulative Ah quantity within 5 minutes (a period can be set).

In some embodiments, the vehicle BMS 110 in S301 may add the first battery parameter data to a battery measurement message, and send the battery measurement message to the cloud BMS 200, where the battery measurement message includes a message serial number.

It can be learned that in this embodiment of this application, battery parameter data may be sent to the cloud BMS 200 in a form of the battery measurement message. In addition, the message serial number is added to the battery measurement message, so that the cloud BMS 200 can accurately learn of whether the battery measurement message of the vehicle BMS 110 is continuous or lost.

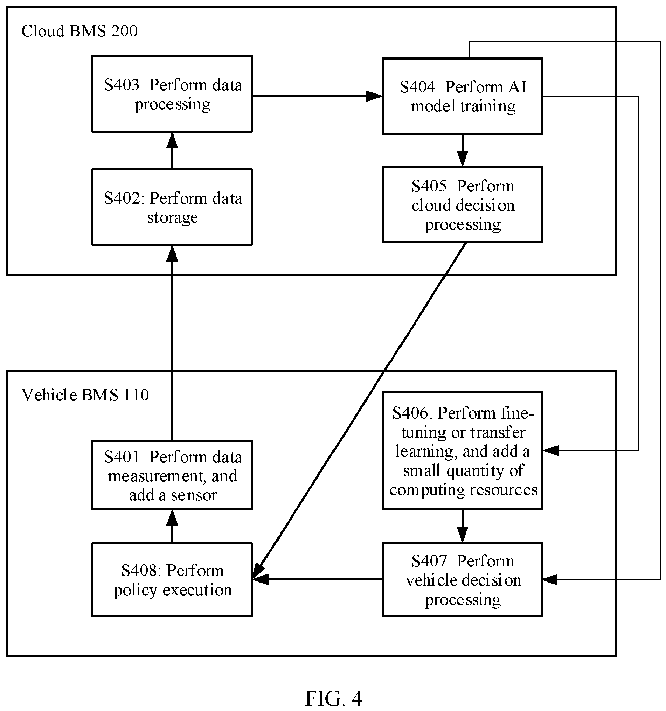

FIG. 4 is a schematic diagram of an implementation process of a cloud-device synergy-based battery management method according to an embodiment of this application. The method is applied to the cloud-device synergy-based battery management system shown in FIG. 1. The cloud-device synergy-based battery management system includes a vehicle 100 and a cloud BMS 200. The vehicle 100 includes a vehicle BMS 110, and the vehicle BMS 110 includes a sensor 1101 and a decision processing module 1102. As shown in FIG. 4, the implementation process of the method may include the following steps:
S401: Perform data measurement, and add a sensor.

Specifically, during data measurement, an operation condition (for example, a vehicle speed/a cumulative mileage) of the vehicle during driving, information (a total current, a total voltage, a cell current, and a temperature) related to a battery pack, and other information such as a location and a motor state may be measured and reported to the cloud BMS 200.

Data such as the vehicle speed/the cumulative mileage is measured by the vehicle BMS 110. The cloud BMS 200 may use the data during AI model training. In addition, data measured by the vehicle BMS 110 mainly includes a current, a voltage, a temperature, and other sensor measurement information, and internal data is defined by each manufacturer.

In some implementations, in this application, fine current granularity (at millisecond-level precision) detection may be added, and a cumulative charging and discharging capacity is recorded by using an ampere hour integral, to improve capacity data precision of the cloud BMS 200; and a measurement message serial number is added, so that whether the vehicle BMS 110 measurement message is continuous or lost can be accurately learned of, thereby reducing a reporting frequency of vehicle measurement data, and reducing a data amount. For example, previously, uploading is uploaded once at an interval of 10s for Ah quantity calculation. Currently, the vehicle BMS 110 reports a cumulative Ah quantity within 5 minutes (a period can be set). This reduces a data transmission amount, and further improves data precision of the cloud BMS 200.

That is, a function of the fine current granularity (at the millisecond-level precision) detection is to improve the data precision of the cloud BMS 200 and reduce the data transmission amount.

The ampere hour integral is an integral of a current in time, namely, the cumulative Ah quantity. Because a data sampling period on the cloud BMS 200 is 10s, the current is an average current in 10s. When the ampere hour integral is calculated on this basis, an error caused by low sampling precision exists. If the vehicle BMS 110 performs sampling based on the millisecond-level or higher precision, the vehicle BMS 110 calculates the ampere hour integral based on the fine current granularity, and reports the ampere hour integral to the cloud BMS 200. In this way, precision of the cloud BMS 200 is much higher.

In some implementations, in this application, the sensor may be added. In this way, sensor measurement information is added to provide more abundant data for the cloud BMS 200. Therefore, data integrity is enhanced, and cloud data quality is improved.

The sensor may include an electrochemical impedance spectrum sensor, configured to collect an electrochemical impedance spectrum signal; a pressure sensor, configured to collect an internal pressure signal of a battery; and an acoustic sensor, configured to collect an internal acoustic signal of the battery.

Specifically, the electrochemical impedance spectrum sensor applies alternating current signals of different frequencies to the battery, observes a response manner of the battery, and obtains response characteristics of internal impedances of the battery at different frequencies to the frequencies. The electrochemical impedance spectrum signal can reflect a health state, a failure state, an internal temperature state, and the like of the battery, has strong coupling, and can be learned through big data processing at the cloud BMS 200. An internal pressure signal is closely associated with a lithium analysis state of the battery, and is greatly interfered with by an external factor, for example, shock or vibration. The cloud BMS 200 learns, from big data, a relationship between a battery pressure and the lithium analysis state under a complex external shock condition. An internal acoustic signal is associated with the health state and the failure state of the battery, has strong coupling, and is easily interfered with by an external signal. Denoising, decoupling, and analysis may be performed on the internal acoustic signal by the cloud BMS 200 through big data processing.

S402: Perform data storage.

Specifically, the cloud BMS 200 stores massive data reported by the vehicle BMS 110, to facilitate subsequent processing.

S403: Perform data processing.

Specifically, the cloud BMS 200 performs cleaning processing on the massive data, to facilitate subsequent AI model training. The cleaning processing includes: removing an abnormal value and removing data such as false alarm.

S404: Perform AI model training.

Specifically, for safety pre-warning or state calculation, AI model training on the cloud BMS 200 is implemented in the following several manners:
Manner 1: a global model is used. To be specific, a same model is used for all vehicles. The model is oriented to a specific task or function, for example, failure pre-warning or capacity estimation. The model can be directly used for result decision processing in these scenarios. Characteristic information (for example, a failure or capacity-related characteristic) in a training sample vehicle is extracted, and a model is trained. Based on the model, decision processing prediction is performed on data of each vehicle on the cloud BMS 200, and a decision processing result (failure pre-warning or the like) is delivered as a policy to the vehicle BMS 110 for control processing.

To be specific, the cloud BMS 200 trains the global model, and the model is trained based on all collected vehicle data. Each vehicle decision processing result is provided based on the model, and is delivered as a policy to the vehicle BMS 110. The device side can directly perform decision processing without training.

Manner 2: a local model is used. To be specific, one model is used for one vehicle type or one vehicle. Same as the global model, the model is also oriented to a specific task. The cloud BMS 200 extracts a characteristic and trains an AI model based on data of a specific vehicle type or each vehicle, and performs decision processing on a corresponding vehicle based on the model.

To be specific, the cloud BMS 200 trains the local model. The local model may be a specific vehicle type or even a specific vehicle. Each vehicle decision processing result is provided based on the model, and is delivered as a policy to the vehicle BMS 110. The vehicle side can directly perform decision processing without training.

It should be noted that the global model or the local model may be pre-trained by the cloud BMS 200. After being deployed, the global model or the local model may be periodically incrementally trained without requiring real-time refreshing.

Manner 3: a pre-training model is used. To be specific, the pre-training model is not oriented to a specific task or function. The pre-training model is formed by learning relationships between data dimensions of the vehicle BMS 110 and characteristics of the data dimensions in a specific time sequence and operation condition from massive data. The model is fine-tuned by combining a downstream task with specific labeled data, to implement tasks such as failure pre-warning and capacity estimation with low resource consumption. For example, the in-vehicle field is used as an example. The cloud BMS 200 stores massive data such as a time sequence, an operation condition, a driving behavior, a location, a total current, a total voltage, a cell voltage, a temperature, a motor state, an alarm type and an alarm severity, and a failure state. The pre-training model learns relationships between these dimensions and derived characteristics of these dimensions through self-supervision. When performing a task, for example, performing level-3 alarm pre-warning, the vehicle BMS 110 only needs to perform fine-tuning on the pre-training model with reference to tagged alarm data, to obtain a model that is of the vehicle and that is oriented to a level-3 alarm pre-warning task. This model has both general information learned from big data and information unique to the model.

Training of the pre-training model is implemented by learning mutual relationships between data dimensions of various batteries and characteristics of the data dimensions in various operation conditions from massive data. The data dimensions include a time sequence, a vehicle speed, a current, a voltage, a temperature, a capacity, a failure, and the like. The relationships learned through pre-training are mutual relationships between the data dimensions and derived characteristics, for example, relationships between the failure and the vehicle speed, the current, the voltage, and the time sequence.

To be specific, the cloud BMS 200 trains the global or local model as a pre-training model, and delivers a model parameter to the vehicle BMS 110. The vehicle BMS 110 uses the model parameter as an initialization parameter for training on the vehicle BMS 110, and performs model parameter optimization based on a small amount of collected data. This process is a fine-tuning or transfer learning process. The vehicle BMS 110 performs decision processing based on a locally trained model.

It should be noted that the pre-training model in Manner 3 is more complicated than the global model and the local model. An advantage of the pre-training model is that the vehicle BMS 110 also has AI model training and decision processing capabilities with less hardware costs, thereby improving accuracy and reliability.

S405: Perform cloud decision processing.

Specifically, based on the global model or the local model trained by the cloud BMS 200, a decision processing result is provided for a task, for example, failure pre-warning or capacity estimation.

The decision processing result of the cloud BMS 200 is provided based on input data and a trained model, where data is input into the model, and the model provides the decision processing result. The input data herein is processed data. An output is a result of AI model prediction, for example, level-3 alarm prediction, and the decision processing result is a probability that level-3 alarm occurs.

S406: Perform fine-tuning or transfer learning, and add a small quantity of computing resources.

Specifically, based on the pre-training model of the cloud BMS 200 and with reference to data fine-tuning on the vehicle BMS 110, a model that is oriented to a specific task (for example, level-3 alarm pre-warning) is obtained.

S407: Perform vehicle decision processing.

Specifically, the vehicle decision processing supports decision processing in two cases:
Case 1: The global model or the local model of the cloud BMS 200 is lightweight and is deployed to the vehicle BMS 110, and the vehicle BMS 110 performs decision processing.
Case 2: After the vehicle BMS 110 performs fine-tuning or transfer learning based on the pre-training model of the cloud BMS 200 to obtain a model, the vehicle BMS 110 performs decision processing.

An objective of fine-tuning or transfer learning is to convert a model pre-trained based on massive cloud data into a model that is more suitable for a vehicle data characteristic. To be specific, the cloud pre-training model is fine-tuned according to a large data amount statistical rule and with reference to personalized vehicle data, so that a finally obtained model is more precise.

It should be noted that "lightweight" refers to placing the global model or the local model in an embedded environment of vehicle. Compared with a cloud big data environment, computing resources such as a CPU and a memory in the embedded environment of vehicle are extremely limited, and a cloud AI model needs to be rewrote based on an embedded environment resource requirement without losing model precision.

In addition, "vehicle decision processing" is similar to "cloud decision processing", but data for vehicle decision processing is limited and does not relate to other vehicle data. However, cloud decision processing is oriented to all vehicle sides that are managed.

S408: Perform policy execution.

It should be noted that, in addition to being applied to fields such as safety pre-warning and state computing, this application may be further applied to fields such as battery service life estimation and mileage estimation.

In the battery service life estimation field, the cloud BMS 200 obtains a battery service life pre-training model by training relationships among parameters such as a time sequence, an operation condition, a current, a voltage, a temperature, a motor, an SOH, and a battery pack model based on massive data, and fine-tuning or transfer learning is performed on the vehicle BMS 110 to obtain a service life estimation model for a vehicle battery pack.

In the mileage estimation field, the cloud BMS 200 obtains a pre-training model for mileage estimation by training relationships among parameters such as a time sequence, an operation condition, a current, a voltage, a temperature, a motor, an SOH, a battery pack model, and a mileage based on massive data, and fine-tuning or transfer learning is performed on the vehicle BMS 110 to obtain a mileage estimation model for a vehicle battery pack.

Then, still as shown in FIG. 4, because the AI model trained on the cloud BMS 200 may be the global model, the local model, or the pre-training model, a corresponding cloud-device synergy-based battery management method may include the following three implementation processes:

First implementation process: cloud training+cloud decision processing+vehicle execution

Specifically, the cloud BMS 200 trains the global model or the local model, and performs decision processing based on the model. The vehicle BMS 110 directly performs policy execution without training.

Second implementation process: cloud training+vehicle decision processing+vehicle execution

Specifically, the cloud BMS 200 trains the global model or the local model. The vehicle BMS 110 makes the global model or the local model trained on the cloud BMS 200 lightweight and deploys an obtained model to the vehicle BMS 110, and the vehicle BMS 110 performs decision processing based on the model and performs policy execution.

Third implementation process: cloud pre-training+vehicle fine-tuning or transfer learning+vehicle decision processing+vehicle execution

Specifically, the cloud BMS 200 trains the global or local model as a pre-training model, and delivers a model parameter to the vehicle BMS 110. The vehicle BMS 110 uses the model parameter as an initialization parameter for training on the vehicle BMS 110, and performs model parameter optimization based on a small amount of collected data. This process is a fine-tuning or transfer learning process. The vehicle BMS 110 performs decision processing based on a locally trained model.

It should be noted that the vehicle BMS 110 may select one implementation from the second or third implementation based on a computing resource constraint. For example, when no new computing resource is added, vehicle decision processing may be only performed without pre-training and fine-tuning.

It can be learned that both the cloud BMS 200 and the vehicle BMS 110 in this application have AI model training and reasoning capabilities, and the vehicle BMS 110 has local training and decision reasoning capabilities under a constraint of limited computing power. Therefore, both precision of a model for capacity prediction, failure prediction, and the like and real-time performance and reliability of reasoning are improved. In addition, measurement information is added by improving a vehicle data measurement part, to provide more abundant data for the cloud BMS 200. This enhances data integrity, improves data quality of the cloud BMS 200, reduces an amount of data reported by the vehicle BMS 110 to the cloud BMS 200, and improves computing efficiency.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that numerical symbols involved in embodiments of this application are differentiated merely for ease of description, but are not used to limit the scope of embodiments of this application.

## Claims

1. A cloud-device synergy-based battery management system, comprising a vehicle and a cloud battery management system, wherein the vehicle comprises a vehicle battery management system, and the vehicle battery management system comprises a sensor and a decision processing module;
the vehicle battery management system is configured to: measure a battery parameter of the vehicle by using the sensor, and send first battery parameter data obtained through measurement to the cloud battery management system;
the cloud battery management system is configured to: train second battery parameter data, and send a first training result obtained through training to the vehicle battery management system, wherein the second battery parameter data comprises the first battery parameter data and historical battery parameter data; and
the vehicle battery management system is further configured to update the decision processing module based on the first training result.

2. The system according to claim 1, wherein the first training result comprises a cloud pre-training model; and
the vehicle-end battery management system is specifically configured to: perform fine-tuning or transfer learning on the cloud pre-training model to obtain a second training result, and update the decision processing module based on the second training result.

3. The system according to claim 1, wherein the first training result comprises a global model or a local model, a global model is used for a plurality of different vehicle types comprising a type to which the vehicle belongs, and a local model is used for the vehicle or a vehicle type to which the vehicle belongs; and
the vehicle battery management system is specifically configured to: update the decision processing module based on the global model or the local model; or perform fine-tuning or transfer learning on the global model or the local model to obtain a third training result, and update the decision processing module based on the third training result.

4. The system according to any one of claims 1 to 3, wherein the sensor comprises one or more of an electrochemical impedance spectrum sensor, a pressure sensor, and an acoustic sensor, wherein
the electrochemical impedance spectrum sensor is configured to measure an electrochemical impedance spectrum signal of a battery of the vehicle; the pressure sensor is configured to measure an internal pressure signal of the battery of the vehicle; and the acoustic sensor is configured to measure an internal acoustic signal of the battery of the vehicle.

5. A vehicle, comprising a vehicle battery management system, wherein the vehicle battery management system comprises a sensor and a decision processing module; and
the vehicle battery management system is configured to: measure a battery parameter of the vehicle by using the sensor, and send first battery parameter data obtained through measurement to a cloud battery management system; and receive a first training result from the cloud battery management system, and update the decision processing module based on the first training result, wherein
the first training result is a training result obtained after the cloud battery management system trains second battery parameter data, and the second battery parameter data comprises the first battery parameter data and historical battery parameter data.

6. The vehicle according to claim 5, wherein the first training result comprises a cloud pre-training model; and
the vehicle-end battery management system is specifically configured to: perform fine-tuning or transfer learning on the cloud pre-training model to obtain a second training result, and update the decision processing module based on the second training result.

7. The vehicle according to claim 5, wherein the first training result comprises a global model or a local model, a global model is used for a plurality of different vehicle types comprising a type to which the vehicle belongs, and a local model is used for the vehicle or a vehicle type to which the vehicle belongs; and
the vehicle battery management system is specifically configured to: update the decision processing module based on the global model or the local model; or perform fine-tuning or transfer learning on the global model or the local model to obtain a third training result, and update the decision processing module based on the third training result.

8. The vehicle according to any one of claims 5 to 7, wherein the sensor comprises one or more of an electrochemical impedance spectrum sensor, a pressure sensor, and an acoustic sensor, wherein
the electrochemical impedance spectrum sensor is configured to measure an electrochemical impedance spectrum signal of a battery of the vehicle; the pressure sensor is configured to measure an internal pressure signal of the battery of the vehicle; and the acoustic sensor is configured to measure an internal acoustic signal of the battery of the vehicle.

9. A cloud-device synergy-based battery management method, applied to a cloud-device synergy-based battery management system, wherein the cloud-device synergy-based battery management system comprises a vehicle and a cloud battery management system, the vehicle comprises a vehicle battery management system, and the vehicle battery management system comprises a sensor and a decision processing module; and
the method comprises:
measuring, by the vehicle battery management system, a battery parameter of the vehicle by using the sensor, and sending first battery parameter data obtained through measurement to the cloud battery management system;
training, by the cloud battery management system, second battery parameter data, and sending a first training result obtained through training to the vehicle battery management system, wherein the second battery parameter data comprises the first battery parameter data and historical battery parameter data; and
further updating, by the vehicle battery management system, the decision processing module based on the first training result.

10. The method according to claim 9, wherein the first training result comprises a cloud pre-training model; and
the updating, by the vehicle battery management system, the decision processing module based on the first training result comprises:
performing, by the vehicle-end battery management system, fine-tuning or transfer learning on the cloud pre-training model to obtain a second training result, and updating the decision processing module based on the second training result.

11. The method according to claim 9, wherein the first training result comprises a global model or a local model, a global model is used for a plurality of different vehicle types comprising a type to which the vehicle belongs, and a local model is used for the vehicle or a vehicle type to which the vehicle belongs; and
the updating, by the vehicle battery management system, the decision processing module based on the first training result comprises:
updating, by the vehicle battery management system, the decision processing module based on the global model or the local model; or performing fine-tuning or transfer learning on the global model or the local model to obtain a third training result, and updating the decision processing module based on the third training result.

12. The method according to any one of claims 9 to 11, wherein the sensor comprises one or more of an electrochemical impedance spectrum sensor, a pressure sensor, and an acoustic sensor, wherein
the electrochemical impedance spectrum sensor is configured to measure an electrochemical impedance spectrum signal of a battery of the vehicle; the pressure sensor is configured to measure an internal pressure signal of the battery of the vehicle; and the acoustic sensor is configured to measure an internal acoustic signal of the battery of the vehicle.

13. The method according to claim 9, wherein the first battery parameter data comprises current parameter data; and
the method further comprises:
calculating, by the vehicle battery management system based on a fine current granularity, ampere hour integral information corresponding to the current parameter data, and adding the ampere hour integral information to the first battery parameter data, wherein the fine current granularity comprises millisecond-level or higher precision.

14. The method according to claim 9 or 13, wherein the sending, by the vehicle battery management system, first battery parameter data obtained through measurement to the cloud battery management system comprises:
adding, by the vehicle battery management system, the first battery parameter data to a battery measurement message, and sending the battery management message to the cloud battery management system, wherein the battery measurement message comprises a message serial number.
